Europäisches Patentamt

European Patent Office

Office européen des brevets

(19)

(11) Veröffentlichungsnummer: **0 253 187**

**A1**

(12) **EUROPÄISCHE PATENTANMELDUNG**

(21) Anmeldenummer: 87109299.5

(22) Anmeldetag: 28.06.87

(51) Int. Cl.⁴: **F16D 23/06**

(30) Priorität: 04.07.86 DE 3622464

(43) Veröffentlichungstag der Anmeldung:
20.01.88 Patentblatt 88/03

(84) Benannte Vertragsstaaten:
FR GB IT SE

(71) Anmelder: GETRAG Getriebe- und
Zahnradfabrik GmbH
Postfach 449 Solitudeallee 24
D-7140 Ludwigsburg(DE)

(72) Erfinder: **Knödel, Gunter**
**Gaussweg 3**
**D-7130 Mühlacker(DE)**
Erfinder: **Henzler, Helga**
**Beethovenstrasse 27**
**D-7141 Murr(DE)**

(74) Vertreter: **Witte, Alexander, Dr.-Ing.**
**Schickhardtstrasse 24**
**D-7000 Stuttgart 1(DE)**

(54) **Synchronisiereinrichtung für Schaltkupplungen.**

(57) Bei einer Synchronisiereinrichtung für Schaltkupplungen, bei der die Schaltmuffe (7) mit den Sperrzähnen (14) des Synchronisierringes (12) zusammenwirkende Sperrzähne (13) und davon getrennte, mit den Kupplungszähnen (10) der Kupplungskörper (8) zusammenwirkende Kupplungszähne (6) aufweist, sind die Sperrzähne (13) mit Hinterschneidungen versehen, deren Flanken (132) in bezug auf die Längsachse (63) im wesentlichen den gleichen Winkel haben wie die Keilflächen (61, 101) an den Enden der Kupplungszähne (6, 10). Diese Hinterschneidungen gestatten nach Erreichen der Synchronisation ein Verdrehen der aus Kupplungskörper (8) und Synchornisierung (10) gebildeten Einheit gegenüber der Schaltmuffe (7), so daß ein widerstandsloses Einführen der Kupplungszähne (6) der Schaltmuffe (7) zwischen die Kupplungszähne (10) des Kupplungskörpers (8) möglich ist.

Fig. 3

## Synchronisiereinrichtung für Schaltkupplungen

Die Erfindung betrifft eine Synchronisiereinrichtung für Schaltkupplungen, insbesondere von Schaltgetrieben für Kraftfahrzeuge, mit einer auf einer Welle befestigten und mit einer Außenverzahnung ausgebildeten Führungsmuffe, mit einem neben der Führungsmuffe auf der Welle drehbar gelagerten Zahnrad, das mit einem mit diesem drehfest verbundenen Kupplungskörper versehen ist, der eine Außenverzahnung bildende Kupplungszähne aufweist, mit einer die Führungsmuffe umgebenden, eine Innenverzahnung aufweisenden Schaltmuffe, deren Innenverzahnung mit der Außenverzahnung der Führungsmuffe in Eingriff steht und durch axiales Verschieben der Schaltmuffe mit der Außenverzahnung des Kupplungskörpers in Eingriff bringbare Kupplungszähne umfaßt, mit einem zwischen Führungsmuffe und Kupplungskörper angeordneten Synchronisierung, der in Umfangsrichtung mit der Schaltmuffe formschlüssig und mit dem Kupplungskörper reibschlüssig in Verbindung steht und an seinem Umfang mit Sperrzähnen versehen ist, denen zur Innenverzahnung der Schaltmuffe gehörende Sperrzähne zugeordnet sind, deren axiale Länge geringer ist als die Länge der Kupplungszähne, und mit an den einander gegenüberstehenden Enden aller Zähne angebrachten Keilflächen, von denen die Keilflächen der Sperrzähne bei fehlender Synchronisation aneinander anliegen und dadurch ein Ineingriffkommen der Kupplungszähne bis zum Erreichen der Synchrondrehzahl verhindern.

Eine solche Synchronisiereinrichtung ist aus der DE-PS 26 59 448 bekannt. Durch die Verwendung unterschiedlicher Zähne für die Sperrung der Schaltmuffe bis zum Erreichen der Synchrondrehzahl und für das Herstellen der formschlüssigen Verbindung zwischen Schaltmuffe und dem zu kuppelnden Zahnrad (Schaltrad) lassen sich sehr kurze Schaltwege realisieren, ohne die Sicherheit des Schaltvorganges zu beeinträchtigen. Wenn beim Schalten durch das Anpressen des Synchronisierringes an den Kupplungskörper und das dadurch ausgeübte Reibmoment eine Drehzahlangleichung zwischen Welle und Schaltrad hergestellt ist und bei Erreichen des Gleichlaufes das Reibmoment stoßartig zusammenbricht, kann die Schaltmuffe mittels der an den Enden ihrer Sperrzähne angebrachten Keilflächen, die mit den Keilflächen an den Enden der Sperrzähne des Sychronisierringes zusammenwirken, den Synchronisierring mit dem Schaltrad gegenüber der Schaltmuffe so weit verdrehen, daß die Sperrzähne der Schaltmuffe den Lücken zwischen den Sperrzähnen des Synchronisierrings gegenüberstehen und die Schaltmuffe über den Synchronisierring hinweg verschoben werden kann, bis die Kupplungszähen der Schaltmuffe mit den Kupplungszähnen am Kupplungskörper in Eingriff kommen. Da die Winkellage des Synchronisierringes gegenüber dem Kupplungskörper unbestimmt ist, werden im allgemeinen die Kupplungszähne der Schaltmuffe nicht den Lücken zwischen den Kupplungszähnen am Kupplungskörper gegenüberstehen, so daß die Kupplungszähne mit ihren einander mehr oder weniger überlappenden Keilflächen aneinander zur Anlage kommen und ein weiteres axiales Verschieben der Schaltmuffe nur dann möglich ist, wenn ein Verdrehen des Synchronisierringes gegenüber dem Kupplungskörper stattfindet, wenn also die reibschlüssige Verbindung zwischen Synchronisierring und Schaltrad wieder gelöst wird. Dieses notwendige Entsperren verursacht einen Widerstand beim Einrücken des Ganges, der sich in Form eines erhöhten zweiten Druckpunktes am Ende des Schaltvorganges unangenehm bemerkbar macht.

Der Erfindung liegt demnach die Aufgabe zugrunde, eine Synchronisiereinrichtung für Schaltkupplungen der eingangs genannten Art so weiterzubilden, daß beim Einrücken eines Ganges nach Erreichen der Synchronisation und dem dadurch bedingten Zusammenbrechen des Reibmomentes kein weiterer Druckpunkt mehr auftritt, der beim Schalten überwunden werden müßte.

Diese Aufgabe wird nach der Erfindung dadurch gelöst, daß sowohl die am Synchronisierring als auch die an der Schaltmuffe angebrachten Sperrzähne unmittelbar im Anschluß an ihre Keilflächen in bezug auf die Axialrichtung unter einem Winkel hinterschnitten sind, der mindestens so groß ist wie der Winkel der Keilflächen, die sich an den Enden der Kupplungszähne von Kupplungskörper und Schaltmuffe befinden.

Die Hinterschneidungen an den Sperrzähnen der Schaltmuffe und des Synchronisierringes erlauben nach Erreichen des Gleichlaufes und dem Zusammenbrechen des Reibmomentes ein Verdrehen von Schaltmuffe und Synchronisierring gegeneinander in dem Maße, wie durch Abgleiten der an den Enden der Kupplungszähne vorhandenen Keilflächen eine Verdrehung des Schaltrades gegenüber der Schaltmuffe stattfindet, ohne daß hierzu die reibschlüssige Verbindung zwischen Synchronisierring und Schaltrad wieder gelöst werden müßte. Dieses Verdrehen des Schaltrades gegenüber der Schaltmuffe erfolgt nach dem Zusammenbruch des Reibmomentes praktisch widerstandsfrei, so daß kein weiteres Entsperren zum Vollenden des Schaltvorganges mehr nötig ist und also auch kein zweiter Druckpunkt am Ende des Schaltvorganges mehr auftreten kann.

Da die Sperrzähne lediglich der Synchronisation dienen und nicht das Betriebs-Drehmoment zu übertragen haben, ist anzustreben, die Zahl der Kupplungszähne möglichst groß zu halten und entsprechend die Zahl der Sperrzähne auf ein Minimum zu reduzieren. Daher sieht eine Ausführungsform der Erfindung vor, daß auf den Umfang der Schaltmuffe mehrere, vorzugsweise drei, einzelne Sperrzähne angeordnet sind, die mit jeweils einem Paar am Umfang des Synchronisierringes angebrachten Sperrzähnen zusammenwirken.

Die erfindungsgemäße Ausbildung der Synchronisiereinrichtung ermöglicht es weiterhin, die Keilflächen an den Sperr-und Kupplungszähnen den jeweiligen Betriebsverhältnissen optimal anzupassen. Während normalerweise die Keilflächen an allen Zähnen die gleiche Neigung in bezug auf die Längsachse der Zähne haben, sieht eine bevorzugt Ausführungsform der Erfindung vor, daß die Keilflächen an den Sperrzähnen in bezug auf die Axialrichtung weniger steil sind als die Keilflächen an den Kupplungszähnen. Durch die flacheren Keilflächen an den Sperrzähnen ist der axiale Anteil der beim Schalten aufgewendeten, der Synchronisierung dienenden Kraft besonders groß, was für eine schnelle Synchronisation und eine Vermeidung des zum Schalten erforderlichen Kraftaufwandes günstig ist, während die steileren Winkel an den Kupplungszähnen nach dem Zusammenbrechen des Reibmomentes ein besonders leichtes Verdrehen der miteinander in Eingriff zu bringenden Kupplungszähne bewirkt. Für eine gute Synchronisation und eine einwandfreie Beherrschung der bei der Synchronisation auftretenden Kräfte kann es insbesondere dann, wenn nur einzelne Sperrzähne verwendet werden, zweckmäßig sein, den Sperrzähnen in Umfangsrichtung eine größere Ausdehnung zu geben als den Kupplungszähnen.

Die Erfindung läßt sich unabhängig davon anwenden, ob die Schaltmuffe dazu dient, wahlweise nur ein einziges neben der Führungsmuffe angeordnetes Zahnrad oder aber eines von zwei zu beiden Seiten der Führungsmuffe angeordneten Zahnrädern mit der Welle drehschlüssig zu verbinden. In dem Fall, daß zu beiden Seiten der Führungsmuffe Zahnräder angeordnet sind, die mit Kupplungskörpern und Synchronisierringen versehen sind, und die Schaltmuffe nach beiden Seiten gegenüber der Führungsmuffe verschiebbar ist, können die einen Teil der Innenverzahnung der Schaltmuffe bildenden Sperrzähne im Bereich ihrer Mitte durch eine Lücke unterbrochen sein. Eine solche Unterbrechung entsteht immer dann, wenn sich die nach der Erfindung vorgesehenen Hinterschneidungen durchdringen, kann aber auch aus fertigungstechnischen Gründen von Vorteil und daher bewußt angebracht sein.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 einen Längsschnitt durch einen Getriebeteil mit einer Synchronisiereinrichtung nach der Erfindung,

Fig. 2 einen Schnit längs der Linie II-II durch das Getriebe nach Fig. 1 und

Fig. 3 bis Fig.5 in einer Abwicklung längs der Linie III-III in Fig. 2 eine Ansicht der miteinander in Eingriff kommenden Verzahnungen bei unterschiedlichen Stellungen der zusammenwirkenden Teile.

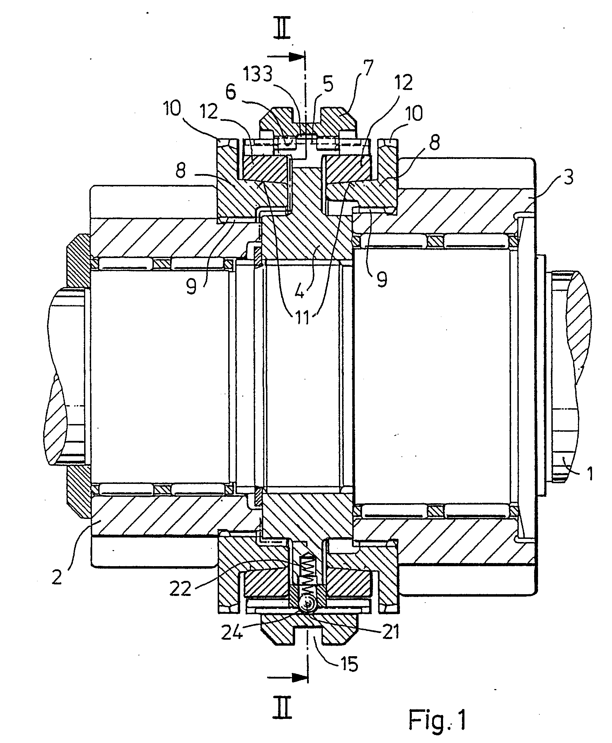

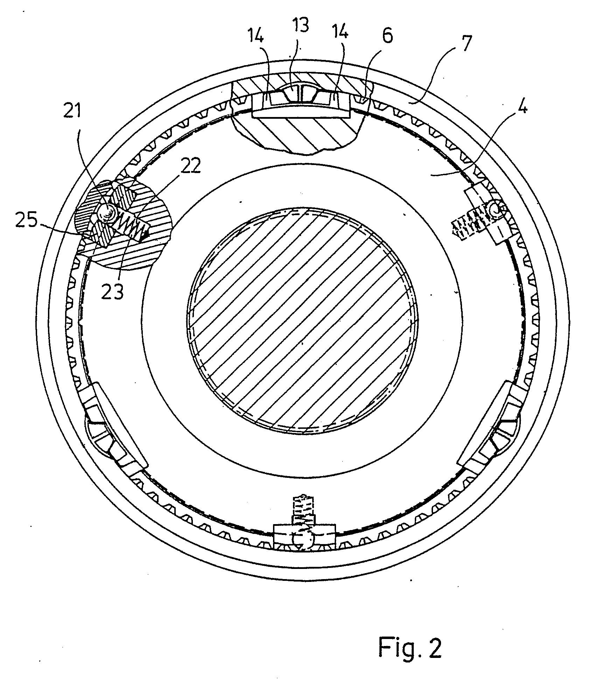

Bei der in den Fig. 1 und 2 dargestellten Anordnung sind auf einer Getriebewelle 1 im Abstand voneinander zwei Zahnräder 2, 3 drehbar gelagert, mit denen in nicht näher dargestellter Weise auf einer zu Getriebewelle 1 parallelen Welle fest angeordnete Zahnräder ständig in Eingriff stehen. Zwischen den beiden Zahnrädern 2, 3 befindet sich eine Schaltkupplung, mit der diese beiden Zahnräder 2, 3 wahlweise mit der Getriebewelle 1 drehschlüssig verbindbar sind, so daß das auf die Getriebewelle 1 ausgeübte Drehmoment über das mittels der Schaltkupplung mit dieser Welle drehfest verbundene Zahnrad auf die dazu parallel Welle gemäß dem Übersetzungsverhältnis übertragen wird, das sich aus dem Verhältnis der Zähnezahlen der miteinander in Eingriff stehenden Zahnräder ergibt.

Die zur Herstellung einer drehfesten Verbindung zwischen einem beliebigen der beiden Zahnräder 2, 3 und der Getriebewelle 1 dienende Schaltkupplung weist eine zwischen den Zahnrädern 2 und 3 auf der Getriebewelle 1 drehfest angeordnete Führungsmuffe 4 auf, die an ihrer Umfangsfläche eine Außenverzahnung 5 aufweist, mit der die Innenverzahnung einer die Führungsmuffe 4 umgebenden Schaltmuffe 7 eingreift. An ihren der Führungsmuffe 4 zugewandten Seiten sind die Zahnräder 2, 3 jeweils mit einem Kupplungskörper 8 versehen, der beispielsweise mittels einer Kerbverzahnung 9 mit dem zugeordneten Zahnrad drehschlüssig verbunden ist, an seinem Umfang mit der Außenverzahnung 5 der Führungsmuffe 4 fluchtende Kupplungszähne 10 sowie an einem Abschnitt kleineren Durchmessers eine Kegelfläche 11 aufweist, auf der jeweils ein Synchronisierring 12 mit einer entsprechenden Kegelfläche sitzt. Die Synchronisierringe 12 befinden sich jeweils zwischen dem mit dem Kupplungszähnen 10 versehenen Abschnitt des Kupplungskörpers 8 und der Führungsmuffe 4 und weisen ebenfalls eine Außenverzahnung auf, die mit der Außenverzahnung 5 der Führungsmuffe 4 und den Kupplungszähnen 10 der Kupplungskörper 8 fluchtet.

Die Schaltmuffe 7 wird normalerweise durch Rastglieder in einer Mittelstellung gehalten. Diese Rastglieder bestehen bei dem dargestellten Ausführungsbeispiel aus Kugeln 21, die von Schraubendruckfedern 22 belastet sind, welche ihrerseits in Radialbohrungen 23 der Führungsmuffe 4 angebracht sind. Die Kugeln 21 greifen in eine zentrale Aussparung, beispielsweise eine Ringnut 24, der Schaltmuffe 7 ein. Im Bereich der Kugeln 21 mit den Schraubendruckfedern 22 weist die Führungsmuffe 4 an ihrem Umfang Querschlitze auf, in die jeweils ein Druckstück 25 eingesetzt ist, das mit seinen Enden den zugewandten Stirnflächen der Synchronisierringe 12 mit geringem Abstand gegenübersteht.

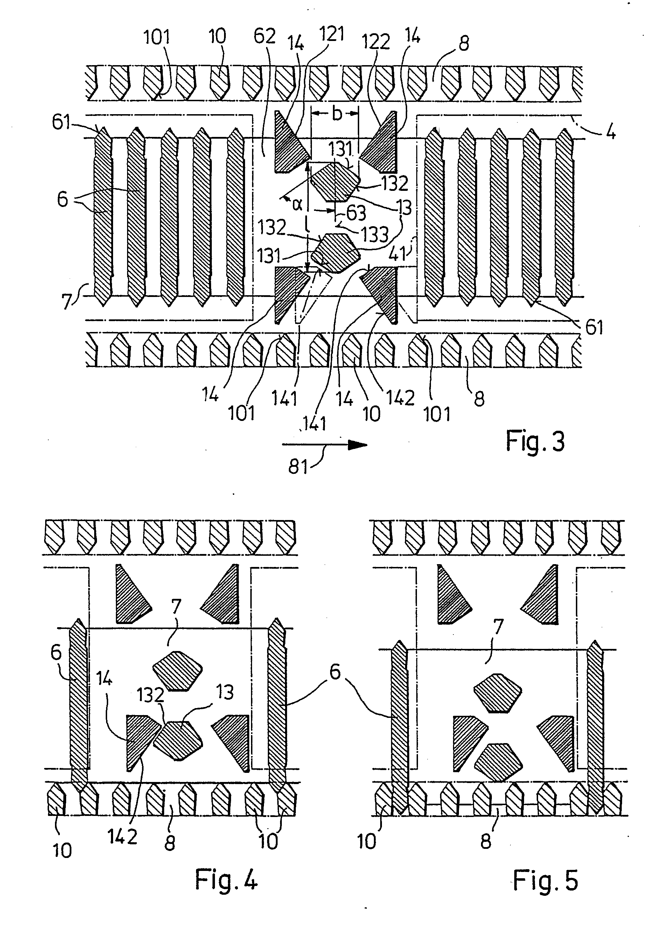

Fig. 3 zeigt in einer Abwicklung die am Umfang der Kupplungskörper 8 angebrachten Kupplungszähne 10, die zu ihren Enden Keilflächen 101 aufweisen. Die Innenverzahnung der Schaltmuffe 7 umfaßt Kupplungszähne 6, die sich über die ganze Breite der Schaltmuffe erstrecken und an ihren Enden wiederum Keilflächen 61 aufweisen, deren Neigung gleich der Neigung der Keilflächen 101 an den Kupplungszähnen 10 der Kupplungskörper 8 ist. Zwischen den Kupplungszähnen 6 befinden sich drei auf den Umfang der Schaltkupplung verteilte Unterbrechungen 62, in deren Bereich sich je ein Sperrzahn 13 befindet, dessen axiale Länge l geringer ist als die Länge der Kupplungszähne 6. Andererseits hat der Sperrzahn 13 eine größere Breite b als die Kupplungszähne 6 und es sind die an den Enden des Sperrzähnes 13 angebrachten Keilflächen 131 flacher als die Keilflächen 61 an den Kupplungszähnen 6, d.h., daß der von den Keilflächen 131 mit der Längsachse 63 gebildete Winkel α größer ist als bei den Kupplungszähnen 6. Weiterhin sind die Zähne im Anschluß an die Keilflächen 131 hinterschnitten, so daß sich also die Sperrzähne 13 nach der den Keilflächen 131 abgewandten Seite hin wieder verjüngen. Die die Verjüngung bestimmenden seitlichen Flanken 132 verlaufen jeweils parallel zu den Keilflächen 61 an den Enden der Kupplungszähne 6. Wie Fig. 3 weiter zeigt, ist im Hinblick auf die bestehende Überschneidung der hinteren seitlichen Flanken 132 der Zahn 13 im Bereich seiner Mitte ausgespart, so daß eine zwei Zahnteile trennende Lücke 133 entsteht.

Jedem der drei Sperrzähne 13 sind an den beiden Synchronisierringen 12 zwei Sperrzähne 14 zugeordnet, die in Umfangsrichtung vor und hinter dem jeweiligen Sperrzahn 13 der Schaltmuffe angeordnet sind, wie es Fig. 2 zeigt. An ihren dem Sperrzahn 13 der Schaltmuffe zugewandten Enden weisen sie Keilflächen 141 auf, welche die gleiche Neigung haben wie die Keilflächen 131 an den Enden des Sperrzähnes 13. Weiterhin sind auch die an den Synchronisierringen 12 angebrachten Sperrzähne 14 hinterschnitten und weisen daher im Anschluß an ihre Keilflächen 141 Flanken 142 auf, welche wiederum die gleiche Neigung haben wie die Keilflächen 61 und 101 an den Enden der Sperrzähne 6 bzw. 10 und somit auch wie die die Hinterschneidungen definierenden Flanken 132 an dem Sperrzahn 13 der Schaltmuffe. Der Abstand zwischen den beiden jeweils einem Sperrzahn 13 der Schaltmuffe zugeord neten Sperrzähnen 14 an dem Synchronisierring 12 ist im wesentlichen gleich der Ausdehnung des Sperrzahnes 13 in Umfangsrichtung, also gleich der Breite b, so daß der Sperrzahn 13 die Lücke zwischen den Sperrzähnen 14 am Umfang der Synchronisierringe 12 passieren kann.

Bei dem in den Fig. 1 und 3 wiedergegebenen Zustand befindet sich die Schaltmuffe 7 in der Neutralstellung, in der keines der beiden Zahnräder 2, 3 mit der Getriebewelle 1 drehfest verbunden ist. Zum Kuppeln eines dieser beiden Zahnräder muß die Schaltmuffe 7 mittels einer nicht näher dargestellten, in die äußere Ringnut 15 eingreifenden Schaltgabel nach links oder rechts verschoben werden, um, nach Herstellung des Gleichlaufs, die Kupplungszähne 6 der Schaltmuffe 7 mit den Kupplungszähnen 10 am Umfang des Kupplungskörpers 8 in Eingriff zu bringen und dadurch eine formschlüssige Verbindung zu der auf der Getriebewelle 1 unverdrehbar gehaltenen Führungsmuffe 4 herzustellen.

Wird demgemäß die Schaltmuffe 7 in Fig. 1 nach links in Richtung auf das benachbarte Zahnrad 2 oder in den Fig. 3 bis 5 nach unten verschoben, so kommt zunächst in üblicher Weise das Druckstück 25 an dem benachbarten Synchronisierring 12 zur Anlage und drückt ihm mit seiner Kegelfläche auf die entsprechende Kegelfläche 11 am Kupplungskörper 8. Dadurch wird zwischen dem Synchronisierring 12 und dem Kupplungskörper 8 eine reibschlüssige Verbindung hergestellt, durch die der Synchronisierring 12 so weit in der relativen Drehrichtung des Kupplungskörpers 8 gegenüber der Führungsmuffe 4 und der Schaltmuffe 7 mitgenommen wird, wie es die zwischen dem Synchronisierring 12 und der Führungsmuffe 4 in Umfangsrichtung bestehende, formschlüssige Verbindung zuläßt. Bei der in Fig. 3 dargestellten Anordnung läuft der untere Kupplungskörper 8 gegenüber der durch eine strichpunktierte Kontur angedeutete Führungsmuffe 4 in Richtung des Pfeiles 81, also nach rechts, vor und nimmt durch Reibungsschluß den Synchronisierring 12 mit, so daß die daran angebrachten Sperrzähne 14 dieser Bewegung folgen, bis sie an einer Flanke 41 der Führungsmuffe 4 zur Anlage kommen. In der dadurch erreichten Stellung steht der in Fig. 3 links unten dargestellte Sperrzahn 14 mit seiner Keilflächen 141 der Keilfläche 131 am Sperrzahn 13 der Schaltmuffe 7 gegenüber. Diese Stellung bleibt erhalten, bis durch die reibschlüssige Verbindung zwischen den Kegelflächen 11 am Synchronisierring 12 und am Kupplungskörper 8 ein Gleichlauf beider Partner erreicht ist. Dann bricht das Reibmoment stoßartig zusammen, so daß die Schaltmuffe 7 mit ihren Sperrzähnen 13 unter Verdrehen des Synchronisierringes 12 und des Kupplungskörpers 8 mit dem Zahnrad 2 in den Raum zwischen den beiden Sperrzähnen 14 am Synchronisierring 12 eintreten kann. Wie in Fig. 4 dargestellt, treffen beim Weiterbewegen der Schaltmuffe 7 die Enden ihrer Kupplungszähne 6 auf die Enden der Kupplungszähne 10 am Kupplungskörper 8. Nur ausnahmsweise werden zufällig die Kupplungszähne 6 der Schaltmuffe 7 genau den Lücken zwischen den Kupplungszähnen 10 des Kupplungskörpers 8 gegenüberstehen, so daß sie ohne Hemmung zwischen diese Zähne eingeführt werden können, wie es in Fig. 5 dargestellt ist. Die Stellung der Kupplungszähne 6 an der Schaltmuffe 7 in bezug auf die Kupplungszähne 10 an dem Kupplungskörper 8 hängt von der augenblicklichen Winkelstellung ab, bei der gerade der Gleichlauf zwischen Synchronisierring und Kupplungskörper erreicht worden ist.

Die über die Keilflächen 61 und 101 an den Enden der Kupplungszähne 6 bzw. 10 erzwingbare Relativdrehung zwischen Schaltmuffe 7 und Kupplungskörper 8 konnte wegen der drehschlüssigen Verbindung zwischen Synchronisierring 12 , Führungsmuffe 4 und Schaltmuffe 7 bisher nur dadurch erzielt werden, daß die reibschlüssige Verbindung zwischen Synchronisierring 12 und Kupplungskörper 8 wieder gelöst wurde. Die hierzu erforderliche Kraft wurde als zweiter Druckpunkt am Ende des Schaltvorganges bemerkt und als unangenehm empfunden. Die bei dem dargestellten Ausführungsbeispiel der Erfindung vorgesehenen, von den Flanken 132 mit 142 begrenzten Hinterschneidungen, welche die gleiche Schräge haben wie die Keilflächen 61 und 101 an den Enden der Kupplungszähne 6 bzw.10, ermöglichen jedoch nach Herstellen des Gleichlaufes nicht nur eine Relativdrehung zwischen Führungsmuffe 4 und Synchronisierring 12 beim Aufheben der Sperrung, sondern, nachdem die Keilflächen 131, 141 an den Sperrzähnen 13, 14 voneinander abgeglitten sind, durch die vorhandenen Hinterschneidungen eine erneute Drehung in dem Maße, wie sie zum Ineinander-Einführen der von den Kupplungszähnen 6, 10 gebildeten Verzahnungen erforderlich ist. Fig. 5 zeigt den Zustand bei hergestellter Kupplung zwischen den Kupplungszähnen 6 der Schaltmuffe 7 und den Kupplungszähnen 10 des Kupplungskörpers 8, so daß in der nun erreichten Stellung der Schaltmuffe 7 wegen deren formschlüssiger Verbindung mit der Führungsmuffe 4 eine drehfeste Verbindung zwischen dem Zahnrad 2 und der Getriebewelle 1 hergestellt ist.

Es ist ersichtlich, daß infolge der Verdrehbarkeit des Synchronisierringes nach Herstellung des Gleichlaufes beim vollständigen Einrücken der Schaltmuffe in die Kupplungstellung jeder weitere Druckpunkt vermieden wird. Dadurch wird in Verbindung mit den kurzen Wegen, welche die gattungsgemäße Synchronisiereinrichtung erlaubt, ein extrem weiches und schnelles Schalten ermöglicht.

Es versteht sich, daß die Erfindung nicht auf das dargestellte Ausführungsbeispiel beschränkt ist, sondern Abweichungen davon möglich sind, ohne den Rahmen der Erfindung zu verlassen. Insbesondere kann die Erfindung auch bei Anordnungen Anwendung finden, bei denen nur ein Zahnrad wahlweise mit einer Welle kuppelbar ist, und es ist die Erfindung unabhängig von der Anzahl der auf den Umfang des Schaltmuffe verteilten Gruppen von Sperrzähnen und auch unabhängig von der Anzahl der Sperrzähne, die innerhalb jeder Gruppe angeordnet sind. Daher läßt sich die Erfindung bei Getrieben sehr unterschiedlichen Aufbaues mit Erfolg anwenden.

**Ansprüche**

1. Synchronisiereinrichtung für Schaltkupplungen, insbesondere von Schaltgetrieben für Kraftfahrzeuge, mit einer auf einer Welle befestigten und mit einer Außenverzahnung ausgebildeten Führungsmuffe, mit einem neben der Führungsmufe auf der Welle drehbar gelagerten Zahnrad, das mit einem mit diesem drehfest verbundenen Kupplungskörper versehen ist, der eine Außenverzahnung bildende Kupplungszähne aufweist, mit einer mit Führungsmuffe umgebenden, eine Innenverzahnung aufweisenden Schaltmuffe, deren Innenverzahnung mit der Außenverzahnung der Führungsmuffe in Eingriff steht und durch axiales Verschieben der Schaltmuffe mit der Außenverzahnung des Kupplungskörpers in Eingriff bringbare Kupplungszähne aufweist, mit einem zwischen Führungsmuffe und Kupplungskörper angeordneten Synchronisierring, der in Umfangsrichtung mit der Führungsmuffe formschlüssig und mit dem Kupplungskörper reibschlüssig in Verbindung steht und an seinem Umfang mit Sperrzähnen versehen ist, denen zur Innenverzahnung der Schaltmuffe gehörende Sperrzähne zugeordnet sind, deren axiale Länge geringer ist als die Länge der Kupplungszähne, und mit an den einander gegenüberstehenden Enden aller Zähne angebrachten Keilflächen, von denen die Keilflächen der Sperrzähne bei fehlender Synchronisation aneinander anliegen und dadurch ein Ineingriffkommen der Kupplungszähne bis zum Erreichen der Synchrondrehzahl verhindern,
dadurch gekennzeichnet, daß
sowohl die am Synchronisierring (12) als auch die an der Schaltmuffe (7) angebrachten Sperrzähne (13 bzw. 14) unmittelbar im Anschluß an ihre Keilflächen (131, 141) in bezug auf die Längsachse (63) unter einem Winkel hinterschnitten sind, der mindestens so groß ist wie der Winkel der Keilflächen (61, 101), die sich an den Enden der Kupplungszähne (10, 6) von Kupplungskörper (8) und Schaltmuffe (7) befinden.

2. Synchronisiereinrichtung nach Anspruch 1, dadurch gekennzeichnet, daß auf dem Umfang der Schaltmuffe (7) mehrere, vorzugsweise drei, einzelne Sperrzähne (13) angeordnet sind, die mit jeweils einem Paar am Umfang des Synchronisierringes (12) angebrachten Sperrzähnen (14) zusammenwirken.

3. Synchronisiereinrichtung nach Anspruch 1 oder 2, dadurch gekennzeichnet, daß die Keilflächen (131, 141) an den Sperrzähnen (13, 14) in bezug auf die Längsachse (63) weniger steil sind als die Keilflächen (61, 101) an den Kupplungszähnen (6, 10).

4. Synchronisiereinrichtungen nach einem der Ansprüche 1 bis 3, dadurch gekennzeichnet, daß die Sperrzähne (13, 14) in Umfangsrichtung eine größere Ausdehnung (b) haben als die Kupplungszähne (6, 10).

5. Synchronisiereinrichtung nach einem der vorhergehenden Ansprüche mit zu beiden Seiten der Führungsmuffe angeordneten Zahnrädern mit Kupplungskörpern und Synchronisierringen und einer gegenüber der Führungs muffe nach beiden Seiten verschiebbaren Schaltmuffe, dadurch gekennzeichnet, daß die einen Teil der Innenverzahnung der Schaltmuffe (7) bildenden Sperrzähne (13) im Bereich ihrer Mitte durch eine Lücke (133) unterbrochen sind.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 144 962 (TOYOTA JIDOSHA) <br> * Figur 4 * | 1-5 | F 16 D 23/06 |
| X | GB-A-2 043 806 (ZAHNRADFABRIK FRIEDRICHSHAFEN) <br> * Seite 1; Figur 3 * | 1,3 | |
| Y | | 2,4,5 | |
| Y | US-A-3 548 983 (HIRAIWA) <br> * Spalten 2-7; Figuren 1-13 * | 2,5 | |
| Y | US-A-3 860 101 (DE FEO) <br> * Spalten 5,6; Figuren 6-9 * | 4 | |
| D,A | DE-B-2 659 448 (GETRAG) | | **RECHERCHIERTE SACHGEBIETE (Int. Cl.4)** <br><br> F 16 D 23/00 |

Der vorliegende Recherchenbericht wurde für alle Patentansprüche erstellt.

| Recherchenort | Abschlußdatum der Recherche | Prüfer |
|---|---|---|
| DEN HAAG | 09-11-1987 | BALDWIN D.R. |